# EUROPEAN PATENT SPECIFICATION

(11) **EP 3 957 772 B1**
(45) Date of publication and mention of the grant of the patent: **29.04.2026**
(21) Application number: 20188259.4
(22) Date of filing: 28.07.2020
(51) Int. Cl.: C25B 1/04, C25B 15/02, C25B 15/08, C01B 3/06, H01M 8/04082, C25B 9/70

(54) **A METHOD FOR GENERATING, STORING AND USING HYDROGEN**
VERFAHREN ZUR ERZEUGUNG, SPEICHERUNG UND VERWENDUNG VON WASSERSTOFF
PROCÉDÉ POUR GÉNÉRER, STOCKER ET UTILISER DE L'HYDROGÈNE

(43) Date of publication of application: 23.02.2022
(73) Proprietor: AIR PRODUCTS AND CHEMICALS, INC., Allentown, Pennsylvania 18195 (US)
(72) Inventor: HIGGINBOTHAM, Paul, Guildford, Surrey GU1 2SY (GB); WHITE, Vince, Ashtead, Surrey KT21 1SE (GB)
(74) Representative: Beck Greener LLP

(56) References cited:
- CN-C- 100 534 840
- JP-A- 2003 342 768
- JP-A- 2018 135 551
- US-A1- 2006 260 933
- US-A1- 2011 042 228
- US-A1- 2019 185 396
- US-A1- 2020 056 290

## Description

The present invention is concerned with the use of hydrogen storage to minimise the impact of variations in hydrogen produced from renewable energy (*i.e.* "green" hydrogen) on the available hydrogen to be fed to a downstream process such as a plant to produce ammonia from the renewable hydrogen.

The upstream hydrogen production process is an electrolysis process using renewable power or energy. A drawback of the use of renewable energy to power the electrolysis is the inherent variation in the availability of the energy source. The downstream process can tolerate some variation in its feed hydrogen but not to the extent that would be required without hydrogen storage - such as turning off periodically.

Hydrogen storage has been proposed in the art for installations that produce "green" hydrogen. However, the prior art installations appear exclusively to rely on storage of hydrogen at high pressures and, in any event, the practical implementation of such storage is not discussed in detail the literature.

JP 2018-135551 A is concerned with a hydrogen supply facility at a hydrogen (filling) station (e.g., for fuel cell vehicles) which is able to respond to fluctuations in demand for hydrogen gas. The document discloses a system for producing hydrogen by electrolysis of water, compressing the hydrogen and then storing compressed hydrogen ready to supply a hydrogen filling station for fuel cell vehicles. According to the figures, water is fed to electrolyser (11) which is powered by a generator (11a) using renewable energy. The product hydrogen is collected in a hydrogen holder (15) before being compressed in a multistage compression system (13). The compressed hydrogen is then fed to an accumulator (12) where it is stored at high pressure. The accumulator (12) feeds a product gas tank (14) which then supplies a hydrogen supply system (2). In this regard, gas is taken from tank (14), further compressed in compressor (21) and stored in accumulator (22) ready for dispensing from dispenser (23) to a fuel cell vehicle. The document further discloses that, when the pressure in tank (14) is too low, gas is taken from the accumulator (12), reduced in pressure across valve (103a) and fed to tank (14). In addition, the accumulator also stores hydrogen gas from tank (14) when the pressure in the tank is too high. The accumulator (12) therefore ensures that tank (14) remains within the required range of operating pressures and is able to provide a stable supply of hydrogen gas to the supply system (2) despite fluctuations in demand.

The invention concerns integrating the requirements of compressing the low-pressure hydrogen from the electrolysers to feed the downstream process with the filling and discharging of hydrogen from storage.

According to a first aspect of the present invention, there is provided a method for supplying hydrogen gas for consumption in at least one downstream process, the method comprising:
producing hydrogen gas by electrolysis of water;
compressing the hydrogen gas in a multistage compression system to produce compressed hydrogen gas; and
feeding the compressed hydrogen gas to the downstream process(es);

wherein at least some electricity for the electrolysis is generated from at least one renewable energy source;
wherein during periods when more hydrogen gas is produced by the electrolysis than is required for the downstream process(es), the method comprises feeding excess compressed hydrogen gas to storage, optionally after further compression; and
wherein during periods when more hydrogen gas is required for the downstream process(es) than is produced by the electrolysis, the method comprises withdrawing compressed hydrogen gas from storage and, after suitable pressure reduction, feeding the reduced pressure hydrogen gas to a stage of the multistage compression system.

The term "suitable" in the context of pressure reduction is intended to mean that the pressure of the hydrogen gas is reduced to an appropriate extent having regard to the inlet pressure of the stage of the multistage compression system to which the reduced pressure hydrogen gas is fed.

In the following discussion of embodiments of the present invention, the pressures given are absolute pressures unless otherwise stated.

### Hydrogen production versus demand

As indicated above, one of the drawbacks of using electricity generated from a renewable energy source is the inherent fluctuations in the availability of the energy source. This problem is addressed in the present invention by providing a system for collecting and storing at least some, preferably all, of the excess hydrogen gas produced during periods when production exceeds demand from the downstream process(es), and distributing stored hydrogen gas to the downstream process(es) during periods when the demand exceeds production.

In some embodiments, the compressed hydrogen may be stored without further compression. In these embodiments, the gas is stored at a pressure up to a maximum pressure of the pressure to which the hydrogen is compressed in the multistage compression system, *e.g*. a pressure up to a maximum of about the feed pressure of the downstream process (where there is only one) or about the feed of one of the downstream processes (if there are more than one). In such embodiments, the compressed hydrogen may perhaps be stored at a pressure up to a maximum pressure in the region of about 25 bar to about 30 bar.

The compressed hydrogen may however be further compressed prior to storage. In these embodiments, compressed hydrogen gas may be stored at a pressure up to a maximum of about 200 bar, or up to a maximum of about 150 bar, or up to a maximum of about 100 bar, or up to a maximum of about 90 bar, or up to a maximum of about 80 bar, or up to a maximum of about 70 bar, or up to a maximum of about 60 bar, or up to a maximum of about 50 bar.

During periods when the level of demand for hydrogen exceeds the production level, compressed hydrogen gas is removed from storage and reduced in pressure to produce reduced pressure hydrogen gas. Pressure may be reduced in any conventional manner, particularly by passing the gas through a valve.

The pressure of the reduced pressure hydrogen gas will depend on the pressure at the point in the multistage compression system to which the reduced pressure hydrogen gas is to be added.

As will be readily appreciated, a "multistage" compression system has a plurality of stages of compression that may be split between compressors in parallel and/or in series. The overall pressure ratio across each stage is generally in the range of about 2 to about 2.5 in order to limit the increase in temperature of the compressed gas.

Coolers are typically required between adjacent stages ("inter-coolers") and typically required after a final stage ("after-coolers") in multistage compression systems to remove heat of compression from the compressed gas. Thus, in the context of the present invention, a "stage" of compression refers to the part of the compression system between coolers.

The multistage compression system comprises one or more compression sections. A "section" of compression in this context refers the part of the compression system between feeds and products. Each section comprises multiple stages of compression, together with the associated coolers.

In some embodiments, reduced pressure hydrogen gas may be fed to the final stage of the multistage compression system. In these embodiments, the reduced pressure hydrogen gas will be at the inlet pressure of the feed to the final stage.

In other embodiments, reduced pressure hydrogen gas may be fed to an intermediate stage of the multistage compression system. In these embodiments, the reduced pressure hydrogen gas will be at the inlet pressure of the feed to the intermediate stage.

The intermediate stage may be an intermediate stage within a compression section or, where there are two or more sections in the multistage compression system, the initial stage within a further compression section downstream of a first compression section. In these embodiments, the reduced pressure hydrogen gas will be at the inlet pressure of the feed to the further compression section, *i.e*. the "inter-section" pressure.

In still further embodiments, the reduced pressure hydrogen gas may be fed to the feed end, *i.e.* to the initial stage, of the multistage compression system. In these embodiments, the reduced pressure hydrogen gas will be the feed pressure to the multistage compression system, *e.g*. about 1.1 bar.

During periods when demand exceeds production, the method may comprise:
reducing the pressure of the compressed hydrogen gas withdrawn from storage to produce reduced pressure hydrogen gas at the inlet pressure to a first stage of the multistage compression system (a first intermediate pressure); and
feeding the reduced pressure hydrogen gas to the first stage.

In such embodiments, once the pressure of the compressed hydrogen gas in storage falls to about the inlet pressure of the first stage, the method may comprise:
reducing further the pressure of the compressed hydrogen gas withdrawn from storage to produce reduced pressure hydrogen gas at an inlet pressure to a second stage of the multistage compression system upstream of the first stage (a second intermediate pressure); and
feeding the reduced pressure hydrogen gas to the second stage.

It will be understood that the terms "first stage" and "second stage" in this context do not refer to the relative positions of the stages in the multistage compression system in the downstream direction during normal operation. In contrast, the terms are merely intended to reflect the order of the stages to which reduced pressure hydrogen gas is fed to the multistage compression system during periods when demand exceeds production. The terms "first intermediate pressure" and "second intermediate pressure" should be interpreted accordingly with the first intermediate pressure being higher than the second intermediate pressure.

These embodiments may further comprise feeding reduced pressure hydrogen gas to other stages of the multistage compression system upstream of the first and second stages. In these further embodiments, the pressure of the compressed hydrogen gas withdrawn from storage is reduced to the inlet pressure to the respective stages.

In some preferred embodiments, the second stage is the initial stage of the multistage compression system.

It will be appreciated that, in embodiments where reduced pressure hydrogen gas is fed to a second stage after the first stage, gas flow to the first stage is stopped when gas flow to the second stage starts. Generally speaking, flow of reduced pressure hydrogen gas to a given compression stage is stopped when flow of reduced pressure hydrogen gas to another compression stage starts.

Since hydrogen gas can be returned from storage to an intermediate stage and/or the initial stage of the multistage compression system, the compressed hydrogen gas may be stored at a pressure down to a minimum of about 5 bar, perhaps even down to a minimum of about 1.3 bar.

In embodiments in which compressed hydrogen gas is further compressed before being stored, another option would be for compressed hydrogen gas withdrawn from storage to be fed, after suitable pressure reduction, directly to the downstream process(es) until the storage pressure falls to the feed pressure of the downstream processes. At that point, the pressure of the compressed hydrogen gas withdrawn from storage would be reduced further and the reduced pressure hydrogen gas fed to a stage of the multistage compression system in accordance with the present invention. However, these embodiments are not preferred, *e.g*. because of the additional capital expense of the high-pressure storage system.

Compared to a high-pressure hydrogen storage system with discharge only to the feed pressure of a downstream process, the present invention enables the storage volume of hydrogen to be reduced by using the multistage compression system that is already present in the process to recompress hydrogen from storage when the storage pressure drops below that feed pressure. The hydrogen can thereby continue to be taken from storage until the storage pressure falls to a minimum of the feed pressure to the multistage compression system.

Additional compression power is required during periods when hydrogen production is limited by lack of power to the electrolysers, but the additional compression power can be minimised by supplying hydrogen at the highest compressor inter-stage pressure possible given the storage pressure at a particular time. It also allows the maximum hydrogen storage pressure to be at or below the feed pressure of the downstream process to eliminate any additional compression requirement for hydrogen to storage.

It will be appreciated that the same volume of gas is stored in the same storage volume at the same maximum pressure and that reducing the minimum storage pressure increases the "releasable" volume of gas from storage, *i.e.* the usable volume of stored gas.

The inventors have, however, realised that where hydrogen is produced and then compressed in a multistage compression system for use in at least one downstream process, the releasable volume of stored hydrogen may be increased by returning hydrogen from storage to a stage in the multistage compression system rather than directly to the downstream process, and that this arrangement reduces the overall storage vessel volume required by the process.

By way of example, storage from a maximum pressure of 200 bar to a minimum pressure of 1.5 bar requires 15% less storage vessel volume for a given mass of releasable hydrogen compared to storage from a maximum pressure of 200 bar to a minimum pressure of 30 bar.

Similarly, storage from a maximum pressure of 100 bar to a minimum pressure of 1.5 bar requires 30% less storage vessel volume for a given mass of releasable hydrogen compared to storage from a maximum pressure of 100 bar to a minimum pressure of 30 bar.

In addition, storage from a maximum pressure of 50 bar to a minimum pressure of 1.5 bar requires 60% less storage vessel volume for a given mass of releasable hydrogen compared to storage from a maximum pressure of 50 bar to a minimum pressure of 30 bar.

Further, storage from a maximum pressure of 30 bar to a minimum pressure of 1.5 bar is feasible compared to 30 bar to 30 bar which would allow no storage.

Moreover, although the total storage vessel volume increases as the maximum storage pressure is reduced, the lower design pressure makes the vessel walls thinner and can reduce the overall capital cost of the storage system. The vessel thickness is often limited to a maximum value by considerations such as manufacturability, and in that case the lower design pressure will lead to fewer vessels (although each vessel will be larger). Furthermore, the allowable stress for the design of a vessel may be increased below a particular vessel wall thickness, and if the lower design pressure allows the thickness to be below this threshold, the total vessel metal mass (and therefore the total cost) can be reduced.

### Electrolysis

Hydrogen gas is generated in the present invention by the electrolysis of water. Any suitable form of water electrolysis may be used including alkaline water electrolysis and polymer electrolyte membrane (PEM) water electrolysis.

The water used for the electrolysis is typically sea water that has been desalinated, possibly by reverse osmosis, and demineralised.

At least some of the electricity required for the electrolysis is generated from a renewable energy source including wind energy, solar energy, tidal energy and hydroelectric energy, or combinations of these sources, particularly wind energy and solar energy. The electricity generated from these sources is used to power to the electrolysers.

Preferably, the process will be self-contained in terms of power generation for the electrolysis. Thus, the entire electricity demand for the electrolysis is ideally met using renewable power sources.

It is envisaged, however, that electricity generated from one or more renewable energy sources may be supplemented by other sources either during periods of particularly high demand for product(s) from the downstream process(es) and/or during periods when the renewable power source is only available below the threshold required to meet demand, or is not available at all. In these cases, additional electricity may be taken from onsite battery storage and/or generated from one or more onsite petrol-, diesel- or hydrogen-powered generator(s), including fuel cells and/or taken from a local or national grid.

A characterising feature of preferred embodiments of the present invention is the scale. In this regard, the electrolysis typically has a total capacity of at least 1 gigawatt (GW). The maximum total capacity of the electrolysis is limited only by practical considerations, *e.g*. generating sufficient power from the renewable energy sources to power the plurality of electrolysers. Thus, the electrolysis may have a maximum total capacity of about 10 GW or more. The total capacity of the electrolysis may be from 1 GW to about 5 GW, *e.g*. from about 1.5 GW to about 3 GW.

The hydrogen gas is typically generated by the electrolysis at pressure slightly higher than atmospheric pressure, *e.g*. about 1.3 bar. However, in some embodiments, the electrolysis produces hydrogen at a somewhat higher pressure, for example up to about 3 bar.

Thus, hydrogen gas is usually fed to the multistage compression system at a pressure in the range from atmospheric pressure to about 3 bar, preferably in the range from atmospheric pressure to about 1.5 bar, *e.g*. about 1.1 bar.

### Purification

The hydrogen gas produced by electrolysis is typically saturated with water at 40°C and usually contains some residual oxygen gas, typically about 500 to about 1000 ppm(v). These impurities will usually have to be removed, depending on the tolerances of the downstream process(es).

In this regard, oxygen is a poison for conventional catalysts used in the Haber process. Thus, in embodiments in which the downstream process is ammonia synthesis, the feed to the catalyst will contain less than about 10 ppm, typically less than about 5 ppm, total oxygen, *i.e.* oxygen atoms from any impurity source such as oxygen gas (O₂), water (H₂O), carbon monoxide (CO) and/or carbon dioxide (CO₂). Accordingly, the feed will also be dry, *i.e*. no more than 1 ppm water.

Downstream processes using conventional "grey" hydrogen (*i.e.* hydrogen derived from a hydrocarbon or carbonaceous feed stream without capture of carbon dioxide, *e.g*. by reforming natural gas), or "blue" hydrogen (*i.e.* hydrogen derived in the same way as grey hydrogen but where some or all of the carbon dioxide associated with production is captured), such as refineries, have similar tolerances for oxygen and water. However, hydrogen liquefaction usually has a tighter specification and requires no more than 10 ppb water and 1 ppm oxygen in the feed.

The compressed hydrogen gas produced by the electrolysis is preferably purified prior to being fed to the downstream process. In this regard, the residual oxygen gas in the compressed hydrogen gas may be converted into water by catalytic combustion of some of the hydrogen to produce oxygen-depleted compressed hydrogen gas (containing no more than 1 ppm O₂) which may then be dried to produce dry compressed hydrogen gas (containing no more than 1 ppm water) for use in the downstream process(es).

### Compression

The multistage compression system is responsible for compressing hydrogen gas from the pressure at which the hydrogen gas is generated by electrolysis to an elevated pressure that is generally at least little higher than the feed pressure of the downstream process.

The compressed hydrogen gas produced by the multistage compression system typically has a pressure from about 10 bar to about 50 bar. In some embodiments, the pressure of the compressed hydrogen gas is from about 25 bar to about 35 bar, preferably about 30 bar. In other embodiments, the pressure of the compressed hydrogen gas is from about 10 bar to about 12 bar, preferably about 11 bar.

In some embodiments, the multistage compression system has only a single section to compress the hydrogen gas to the desired elevated pressure. In other embodiments, the multistage compression system comprises a first section and at least one further section downstream of the first section.

In particular embodiments, the multistage compression system has two sections, a first (low pressure or "LP") section in which hydrogen gas is compressed from the feed pressure to the multistage compression system to a first elevated pressure in the range from about 2 bar to about 6 bar, and a second (medium pressure or "MP") section in which hydrogen gas is compressed from the first elevated pressure to the final elevated pressure desired for the downstream process(es).

In some embodiments, the first elevated pressure of the hydrogen gas after compression in the first section may be in the range of about 2 bar to about 3 bar, *e.g*. 2.5 bar. In other embodiments, the first elevated pressure may be in the range of about 4 bar to about 6 bar, *e.g.* 5 bar.

### Downstream process(es)

The compressed hydrogen gas is consumed in a downstream process, or in more than one downstream process arranged in parallel.

The downstream process(es) could include any process that would currently use "grey" hydrogen or "blue" hydrogen. Such processes include oil refining and steel manufacture.

In preferred embodiments, at least some, *e.g.* all, of the compressed hydrogen is used to produce ammonia *via* the Haber (or Haber-Bosch) process. In this process, ammonia is produced by reacting a mixture of hydrogen and nitrogen gases over an iron-based catalyst at high temperature, typically at about 400°C to about 500°C, and at high pressure, typically at a pressure in the range from about 100 bar to 200 bar.

In other embodiments, at least some, *e.g*. all, of the compressed hydrogen gas is liquefied by cryogenic cooling.

In still further embodiments, a first part of the compressed hydrogen gas is used to produce ammonia and a second part of the compressed hydrogen gas is liquefied.

### Apparatus

Apparatus for supplying hydrogen gas for consumption in a downstream process comprises:
a plurality of electrolysers arranged in parallel for producing hydrogen gas;
an electricity generation system for generating electricity from a renewable energy source to supply at least some of the electricity required to power the plurality of electrolysers, the electricity generation system being in electrically conductive communication with the plurality of electrolysers;
a multistage compression system for compressing hydrogen gas, said multistage compression system comprising a feed end and an outlet end, the feed end being in fluid flow communication with the plurality of electrolysers;
at least one downstream processing unit for consuming compressed hydrogen gas, the downstream processing unit(s) being in fluid flow communication with the outlet end of the multistage compression system;
a storage system for storing compressed hydrogen gas, the storage system being in fluid flow communication with the outlet end of the multistage compression system and at least one compression stage of the multistage compression system; and
a control system for controlling pressure and flow of compressed hydrogen gas from the multistage compression system to the storage system and for controlling pressure and flow of compressed hydrogen gas from the storage system to the multistage compression system based on the level of production of hydrogen gas by the electrolysers and/or the demand of the downstream process(es).

### Electrolysers

The electrolysis of water is provided by a plurality of electrolysis units or "cells". Each unit or cell may be referred to as an "electrolyser".

The plurality of electrolysers typically has a total capacity of at least 1 GW. The maximum total capacity of the electrolysers is limited only by practical considerations, *e.g*. generating sufficient power from the renewable energy source(s) to power the plurality of electrolysers. Thus, the electrolysers may have a maximum total capacity of 10 GW or more. The total capacity of the electrolysers conducting the electrolysis may be from 1 GW to 5 GW, *e.g*. from about 1.5 GW to about 3 GW.

The plurality of electrolysers usually consists of a large number, *e.g*. hundreds, of individual cells combined into "modules" that also include process equipment, *e.g*. pumps, coolers, and/or separators, etc., and groups of these modules are typically arranged in separate buildings.

Each module typically has a maximum capacity of at least 10 MW, *e.g*. 20 MW, and each building typically has a total capacity of at least 100 MW, *e.g*. 400 MW.

Any suitable type of electrolyser may be used with the present invention. In this regard, there are three conventional types of electrolyser - alkaline electrolysers, PEM electrolysers and solid oxide electrolysers - and each of these types of electrolyser is in theory suitable for use with the present invention.

Alkaline electrolysers operate *via* transport of hydroxide ions (OH⁻) through the electrolyte from the cathode to the anode with hydrogen being generated on the cathode side. Electrolysers using a liquid alkaline solution of sodium hydroxide or potassium hydroxide as the electrolyte are commercially available. Commercial alkaline electrolysers typically operate at a temperature in the range of about 100°C to about 150°C.

In a PEM electrolyser, the electrolyte is a solid plastics material. Water reacts at the anode to form oxygen and positively charged hydrogen ions. The electrons flow through an external circuit and the hydrogen ions selectively move across the PEM to the cathode. At the cathode, hydrogen ions combine with electrons from the external circuit to form hydrogen gas. PEM electrolysers typically operate at a temperature in the range of about 70°C to about 90°C.

Solid oxide electrolysers use a solid ceramic material as the electrolyte that selectively conducts negatively charged oxygen ions (O²⁻) at elevated temperatures. Water at the cathode combines with electrons from the external circuit to form hydrogen gas and negatively charged oxygen ions. The oxygen ions pass through the solid ceramic membrane and react at the anode to form oxygen gas and generate electrons for the external circuit. Solid oxide electrolysers must operate at temperatures high enough for the solid oxide membranes to function properly, e.g. at about 700°C to about 800°C.

Due to the lower operating temperatures, the use of alkaline electrolysers and/or PEM electrolysers are typically preferred.

The plurality of electrolysers may be arranged in at least two parallel groups. Thus, the apparatus may comprise:
a first header to collect hydrogen gas from each electrolyser in each group; and
a second header to collect hydrogen gas from the first headers and feed the hydrogen gas to the feed end of the multistage compression system;
wherein the apparatus further comprises a conduit for feeding compressed hydrogen gas from the storage system after suitable pressure reduction to the second header.

### Electricity generation system

Electricity for the electrolysis is generated from at least one renewable energy source, *e.g*., wind energy and/or solar energy.

Where wind energy is used to generate electricity, the electricity generation system will comprise a plurality of wind turbines. Where solar energy is used to generate electricity, the electricity generation system will comprise a plurality of photovoltaic cells, or "solar cells".

The apparatus may comprise a plurality of wind turbines and a plurality of photovoltaic cells.

The expression "electrically conductive communication" will be understood to mean that appropriate wires and/or cables will be used, together with any other relevant equipment, to connect the electricity generation system with the electrolysers in a safe and efficient manner.

### Multistage compression system

As mentioned above, the multistage compression system comprises a plurality of stages typically having a compression ratio in the range of about 2 to about 2.5. Inter-coolers are typically provided between adjacent stages, and after-coolers may be required after a final stage.

The stages of a multistage compression system are also arranged in one or more compression sections. Each section may comprise one or more stages of compression, together with the associated coolers.

The multistage compression system may has two sections, a first (low pressure or "LP") section in which hydrogen gas is compressed from the feed pressure to the multistage compression system to a first elevated pressure, and a second (medium pressure or "MP") section in which hydrogen gas is compressed from the first elevated pressure to the final elevated pressure desired for the downstream process(es).

An LP section may have one or more, *e.g*., two, stages of compression and an MP section may have two or more, e.g. 3 or 4, stages of compression.

By way of example, for a process having a total electrolyser capacity of 1 GW, the multistage compression system may have from 5 to 15 compressors, *e.g*. from 7 to 13 compressors or from 9 to 11 compressors, as required. The skilled person would appreciate that a process having a higher total capacity would require a greater number of compressors.

Compressors in an LP section may be oversized as appropriate, *e.g*. by 10%, to accommodate the loss of a machine. Additionally or alternatively, the multistage compression system may comprise a spare compressor in either the LP or an MP section which would cut-in to replace another machine in the relevant section that had broken down.

The compressors in the multistage compression system are usually reciprocating compressors. However, centrifugal compressors may be used instead of some or all of the reciprocating compressors.

### Purification system

Where the downstream process(es) cannot tolerate the levels of water and oxygen inherently present in the compressed hydrogen gas produced by the electrolysis of water, the apparatus will comprise a purification system in which the compressed hydrogen gas is purified.

The purification system will typically comprise a "DeOxo" unit in which oxygen is removed by the catalytic combustion of hydrogen to produce water and oxygen-depleted compressed hydrogen gas.

The oxygen-depleted gas may then be dried in a drier, *e.g*., an adsorption unit, such as a temperature swing adsorption (TSA) unit, to produce dry compressed hydrogen gas for the downstream process(es).

### Return of stored hydrogen

As mentioned above, the multistage compression system may comprise a single section.

In these embodiments, the section typically comprises a plurality of compressors arranged in parallel, each compressor comprising at least one stage. The apparatus may further comprise a third header to collect compressed hydrogen gas from each compressor and feed the compressed hydrogen gas to the at least one downstream processing unit, or to a purification system upstream of at least one downstream process unit.

The apparatus may comprise a conduit for feeding compressed hydrogen gas from said storage system after suitable pressure reduction to the second header.

However, the multistage compression system may comprise:
a first section comprising a plurality of compressors arranged in parallel, each compressor comprising at least one stage; and
a second section downstream of the first section, the second section comprising a plurality of compressors arranged in parallel, each compressor comprising at least two stages arranged in series.

The apparatus may comprise:
a third header to collect compressed hydrogen gas from each compressor in the first section and feed the compressed hydrogen gas to the compressors of the second section; and
a fourth header to collect compressed hydrogen gas from each compressor in the second section and feed the compressed hydrogen gas to the downstream processing unit(s), or to a purification system upstream of the downstream process unit(s).

The apparatus may further comprise a conduit for feeding compressed hydrogen gas from the storage system after suitable pressure reduction to the third header.

The plurality of electrolysers may be arranged in at least two groups. Thus, the multistage compression system may comprise:
a first section comprising a plurality of compressors arranged in parallel in at least two groups, each compressor comprising at least two stages arranged in series; and
a second section downstream of the first section, the second section comprising a plurality of compressors arranged in parallel, each compressor comprising at least two stages arranged in series.

The apparatus may further comprise:
at least two first headers, each first header to collect hydrogen gas from each electrolyser in a group and feed the hydrogen gas to the feed end of a respective group of compressors in the first section of the multistage compression system;
a second header to collect compressed hydrogen gas from each group of compressors in the first section and feed the compressed hydrogen gas to the compressors of said second section; and
a third header to collect compressed hydrogen gas from each compressor in the second section and feed the compressed hydrogen gas to the downstream processing unit(s), or to a purification system upstream of the downstream process unit(s).

The apparatus may comprise a conduit for feeding compressed hydrogen gas from the storage system after suitable pressure reduction to at least one of said first headers.

Additionally or alternatively, the apparatus may comprise a conduit for feeding compressed hydrogen gas from the storage system after suitable pressure reduction to the second header.

### Storage system

The storage system typically comprises a number of pressure vessels and/or pipe segments connected to a common inlet/outlet header.

The pressure vessels may be spheres, *e.g.* up to about 25 m in diameter, or "bullets", *i.e.* horizontal vessels with large L/D ratios (typically up to about 12:1) with diameters up to about 12 m.

Salt domes may also be used if the geology of the site allows.

### Downstream processing unit(s)

A downstream processing unit may be any unit that utilises hydrogen gas as a feedstock.

Examples of suitable downstream processing units include an oil refinery, a steel manufacturing facility, an ammonia synthesis plant or a hydrogen liquefaction plant. There may be both an ammonia synthesis plant and a hydrogen liquefaction plant arranged in parallel.

### Control system

The control system controls not only the pressure and flow of compressed hydrogen from the multistage compression system to the storage system, *e.g*. during periods when hydrogen production exceeds demand, but also the pressure and flow of compressed hydrogen gas to the multistage storage system, *e.g*. during periods when hydrogen demand exceeds production.

The control system may simply seek to maintain the pressure of hydrogen gas in a downstream header to the downstream process. Thus, in order to continually provide a given amount of hydrogen to the downstream process, a pressure controller would be maintained on a discharge header that feeds the downstream process.

If the pressure in the discharge header exceeded the required feed pressure (*e.g*. because there is more hydrogen available than the downstream process is consuming), the pressure would be relieved by opening a valve in the feed line to storage.

Once the pressure in the discharge header dropped to the required feed pressure, the valve in the feed line to storage would be closed.

If the pressure in the discharge header dropped below the required feed pressure (*e.g*. because there is less hydrogen available than the downstream process is consuming), the pressure would be increased by opening a valve in a first return line from storage to a first stage in the multistage compression system.

The valve in the first return line would remain open until such time that the pressure in the discharge header exceeded the required feed pressure, indicating that the level of hydrogen production has returned to the required level, at which point the valve would be closed, or until the pressure in the storage vessel drops to about the inlet pressure to the first stage of multistage compression system being fed by the first return line.

In the latter case, not only would the valve in the first return line be closed, but also a valve in a second return line from storage to a second stage in the multistage compression system (upstream of the first stage) would be opened so as to continue to feed hydrogen from storage back to the downstream process.

Such a control system may be referred to as a "split range" control system.

### Water source

Any suitable source of water may be used with the present invention. However, where sea water is used to produce the water for the electrolysis, the apparatus would further comprise at least one unit (or plant) for desalination and demineralisation of the sea water.

The invention will now be described by example only and with reference to the figures in which:
FIGURE 1 is a simplified flowsheet for a conventional process in which hydrogen is produced by electrolysis of water, compressed and fed to a downstream ammonia plant, and in which excess hydrogen is stored at high pressure;
FIGURE 2 is a simplified flowsheet for a first embodiment of the present invention as applied to the process of FIGURE 1 in which the multistage compression system has a single section;
FIGURE 3 is a simplified flowsheet for a second embodiment of the present invention as applied to the process of FIGURE 1 in which the multistage compression system has a low pressure (LP) section and a medium pressure (MP) section;
FIGURE 4 is a further simplified flowsheet providing further details of one option for integrating the first embodiment of the invention with the process of FIGURE 1;
FIGURE 5 is another simplified flowsheet providing further details of one option for integrating the second embodiment of the invention with the process of FIGURE 1; and
FIGURE 6 is another simplified flowsheet providing further details of another option for integrating the second embodiment of the invention with the process of FIGURE 1.

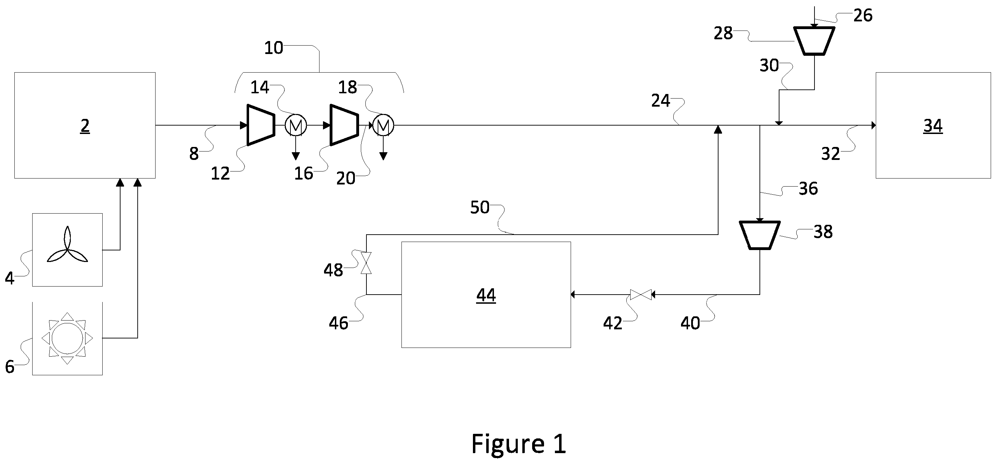

As mentioned above, the multistage compression system comprises a plurality of stages typically having a compression ratio in the range from about 2 to about 2.5. Inter-coolers are typically provided between adjacent stages, and after-coolers may be required after a final stage. In Figures 1 to 3, the multistage compression system is depicted for simplicity with one or two stages of compression with one intercooler and/or aftercooler.

According to Figure 1, hydrogen is produced at about atmospheric pressure by electrolysis of water in a plurality of electrolyser units indicated generally by reference numeral 2. The electricity required to power the electrolysers is generated at least in part by renewable energy sources such as the wind (indicated generally by unit 4) and/or the sun (indicated generally by unit 6). Additional electricity may be generated by a diesel-, petrol- or hydrogen-powered generator (not shown) or taken from a grid (not shown).

A stream 8 of hydrogen is removed from the electrolysers 2 at a pressure just over atmospheric pressure (*e.g*. about 1.1 bar) and is fed a multistage compression system 10 (indicated schematically in the figure as having a first stage 12, an intercooler 14, a second stage 16 and an aftercooler 18) to produce a stream 20 of compressed hydrogen gas at a pressure between 80 bar to 150 bar. In order to achieve such high pressure, the multistage compression system usually has at least two compression sections.

As indicated above, the hydrogen gas from the electrolysers is usually wet (saturated at 40°C) and contains some oxygen (typically, 500 ppm to 1000 ppm). The hydrogen gas is therefore purified in a purification unit (not shown) located at an intermediate point of the multistage compression system, typically at a location where the pressure is in the range from about 20 bar to about 40 bar, *e.g*. about 30 bar. In this regard, oxygen is removed by the catalytic combustion of some of the hydrogen to form water in a "DeOxo" unit (not shown) and the oxygen-depleted hydrogen gas (containing no more than 1 ppm O₂) is dried by adsorption in a drier unit (not shown).

A stream 20 of purified compressed hydrogen is removed from the final stage 16 of the multistage compression system 10 and fed to an aftercooler 18 to produce a stream 24 of purified compressed hydrogen (typically containing no more than 5 ppm total oxygen, including 1 ppm water) which is removed from the purification unit.

A stream 26 of nitrogen gas is produced by cryogenic distillation in an air separation unit (ASU; not shown) and compressed in compressor 28 to produce a stream 30 of compressed nitrogen gas having a purity of about 99.99% at a pressure between 80 bar to 150 bar. Stream 30 is then combined with stream 24 of compressed hydrogen gas and the combined stream 32 of synthesis gas is fed to an ammonia synthesis plant 34.

During periods when more hydrogen gas is produced by the electrolysis than is required for the ammonia plant 34, a stream 36 of excess compressed hydrogen gas is removed, fed to compressor system 38 where it is compressed to 200 bar before being sent as stream 40 (*via* control valve 42) to storage 44.

During periods when the ammonia plant 34 requires more hydrogen gas than is produced by the electrolysis, a stream 46 of compressed hydrogen gas is removed from storage 44, depressurised through valve 48 to produce a stream 50 of reduced pressure hydrogen gas at a pressure between 80 bar to 150 bar which is fed to stream 24 to supplement the hydrogen feed to the ammonia plant 34.

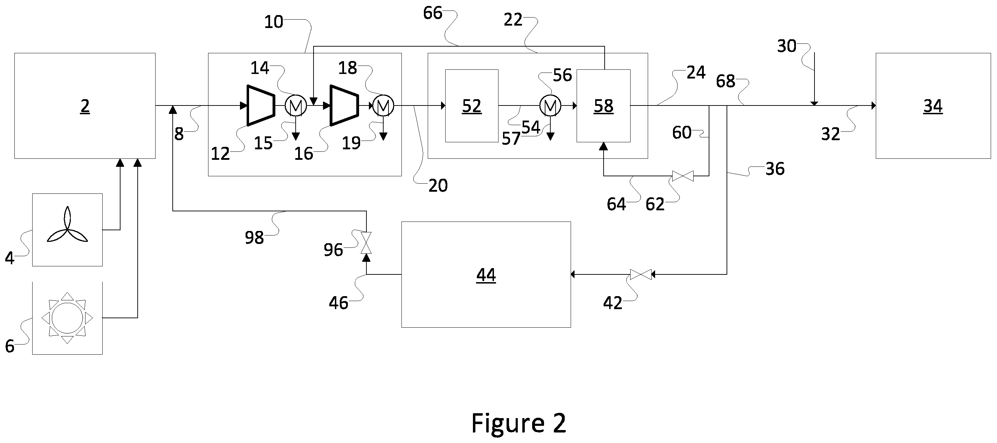

Figure 2 depicts a first embodiment of the present invention. The same numerical references have been used to denote features of the flowsheet in Figure 2 that are common to the flowsheet of Figure 1. The following is a discussion of the features that distinguish the first embodiment of Figure 2 from the process shown in Figure 1.

Regarding Figure 2, the multistage compression system 10 has a single section containing all of the compression stages (indicated generally as stages 12 and 16) and associated intercoolers and aftercooler(s) (indicated generally as coolers 14 and 18 generating condensate streams 15 and 19 respectively) and compresses the hydrogen gas in stream 8 from about atmospheric pressure to about 30 bar.

Further details of the purification unit 22 are also provided in Figure 2. In this regard, the stream 20 of compressed hydrogen gas is fed to a "DeOxo" unit 52 within which residual oxygen is removed by catalytic conversion to water to produce a stream 54 of oxygen-depleted hydrogen gas which is cooled by indirect heat exchange in cooler 56, generating condensate stream 57, and then dried by adsorption in unit 58 to produce stream 24 of compressed hydrogen gas.

The adsorption beds in unit 58 are regenerated using a stream 60 of compressed hydrogen gas taken from stream 24. Stream 60 is depressurised to about 14 bar through valve 62 and the reduced pressure stream 64 used to regenerate the drier 58. The spent regeneration gas is returned as recycle stream 66 to the hydrogen gas stream in an intermediate stage of the multistage compression system 10 for recompression. The water therefore comes out in condensate stream 19.

A remaining part 68 of stream 24 is combined, possibly after pressure reduction if required, with stream 30 of nitrogen gas from an ASU (not shown) to form a synthesis gas stream 32 which is fed to the ammonia plant 34 where it is compressed (not shown) to the pressure required for ammonia synthesis.

Stream 36 of compressed hydrogen gas may be reduced in pressure through valve 42 if required and fed to a storage unit 44 where it is stored at a pressure up to a maximum of 26 bar. When required, stream 46 of hydrogen gas is removed and reduced in pressure across valve 96 before being returned as stream 98 to the feed to the initial stage 12 of the multistage compression system 10.

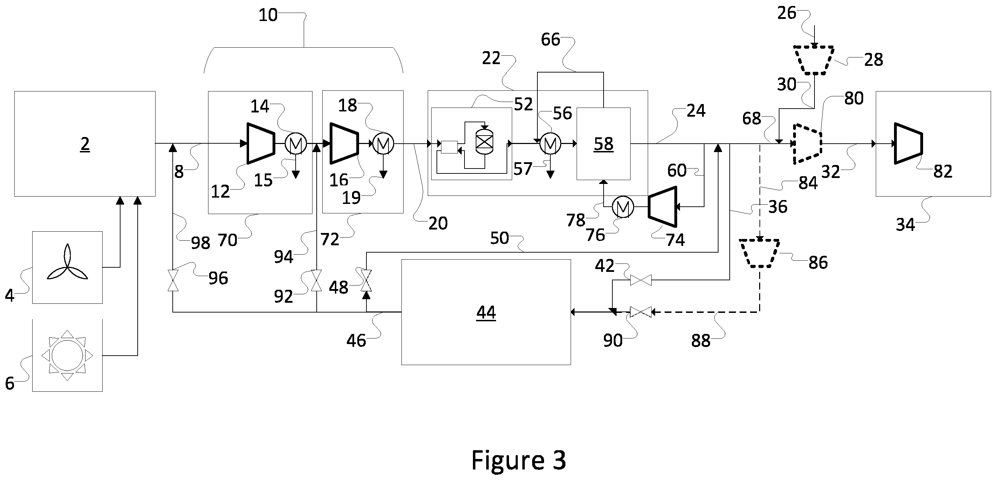

Figure 3 depicts a second embodiment of the present invention. The same numerical references have been used to denote features of the flowsheet in Figure 3 that are common to the flowsheets of Figures 1 and 2. The following is a discussion of the features that distinguish the second embodiment of Figure 3 from the processes shown in Figures 1 and 2.

Multistage compression system 10 has an LP section 70 containing compressors 12, intercoolers (not shown) and aftercoolers 14, and an MP section 72 containing compressors 16, intercoolers (not shown) and aftercoolers 18. Stream 8 of hydrogen gas is fed to the LP section 70 where it is compressed from about 1.1 bar to about 5 bar and the discharge from the LP section 70 is fed to the MP section where it is compressed further to a pressure that is about 1 bar above the pressure at the point downstream where stream 68 is mixed with stream 30 of nitrogen.

Thus, where the pressure at the point at which the hydrogen and nitrogen are mixed is about 10 bar, the MP section 72 compresses the hydrogen gas to about 11 bar. Alternatively, where the pressure at the point at which the hydrogen and nitrogen are mixed is about 26 bar, the MP section 72 compresses the hydrogen gas to about 27 bar.

The stream 60 of purified hydrogen gas used to regenerate the drier 58 may be fed to a blower 74 and a heater 76 prior to being fed as stream 78 to the drier 58. Additionally, the stream 66 of spent regeneration gas may be recycled to the purification unit 22 at a point between the "DeOxo" unit 52 and the drier 58. The water removed in the drier 58 is therefore rejected from the system in condensate stream 57.

As mentioned above, stream 68 of compressed hydrogen gas may be mixed with stream 30 of nitrogen gas from the ASU (not shown) at a pressure at which the nitrogen gas is taken from the ASU, *e.g*. about 10 bar. In these embodiments, the combined gas is compressed in a compressor system 80 to produce stream 32 of synthesis gas at a pressure of about 26 bar which is then fed to the ammonia plant 34 where it is further compressed in compression system 82 prior to being fed to the catalytic reactor (not shown).

Alternatively, stream 68 of compressed hydrogen gas may be mixed with stream 30 of nitrogen gas from the ASU (not shown) at the feed pressure to the ammonia plant, *i.e.* about 26 bar. In these embodiments, the stream 26 of nitrogen gas from the ASU is compressed in compression system 28 to produce compressed nitrogen gas at about 26 bar which is then mixed with the compressed hydrogen gas to produce stream 32 of synthesis gas. Stream 32 is then fed to the ammonia plant 34 where it is further compressed in compression system 82 prior to being fed to the catalytic reactor (not shown).

Dry hydrogen gas may be stored in the storage system 44 up to a maximum pressure of the feed pressure to the ammonia plant, *i.e*. about 26 bar. In these embodiments, stream 36 of compressed hydrogen gas is taken from stream 24, adjusted in pressure as appropriate across valve 42 and fed to the storage system.

Alternatively, the hydrogen may be stored at higher pressure, *e.g*. up to a maximum pressure of 50 bar or even 100 bar or more. In such embodiments, stream 84 of hydrogen gas is removed from stream 24, compressed in storage compression system 86 to form stream 88 which is adjusted in pressure across valve 90 as required before being fed to the storage system 44.

During periods when demand for hydrogen exceeds production, hydrogen from the storage system 44 may be fed in stream 50, after suitable pressure reduction (*e.g*. across valve 48), directly to the hydrogen feed in the stream 24 to the ammonia plant 34. In some embodiments, hydrogen withdrawn from storage may be fed in stream 94, after suitable pressure reduction (*e.g*. across valve 92), to a point between the LP section 70 and the MP section 72 of the multistage compression system 10. In still further embodiments, hydrogen withdrawn from storage may be fed in stream 98, after suitable pressure reduction (*e.g*. across valve 96), to the feed to the initial compression stage 12 of the LP section 70.

In some embodiments, hydrogen gas withdrawn from storage is fed in stream 50 to the ammonia plant 34 until the pressure in the storage system falls to about the feed pressure to the plant 34 at which point valve 48 would be closed and valve 92 opened. The withdrawn hydrogen gas may then be fed in stream 94 to the point between the sections 70, 72 of the multistage compression system 10 until the pressure in the storage system falls to about the feed pressure to the MP section 72. At this point, valve 92 is closed and valve 96 opened thereby providing withdrawn hydrogen gas in stream 98 to the feed to the initial stage of multistage compression system 10.

This sequential approach to feeding hydrogen from storage to the downstream process has an advantage in that it represents a more energy efficient method for returning hydrogen to the process during periods where demand exceeds production compared to feeding hydrogen from storage only through line 98.

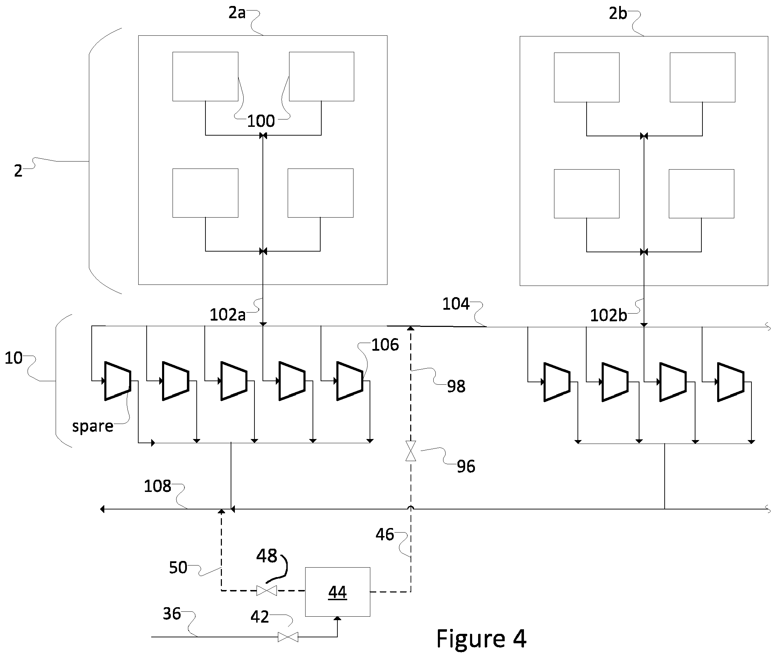

Figure 4 illustrates one arrangement of the electrolysers and the multistage compression system depicted in Figure 2. The same numerical references have been used to denote features of the arrangement in Figure 4 that are common to the previous figures. The following is a discussion of the distinguishing features of the arrangement.

In this regard, a plurality 2 of electrolyser units 100 are arranged in parallel within at least two parallel groups - group 2a and group 2b. Hydrogen gas produced in each unit 100 within group 2a is collected by a first header 102a and hydrogen gas produced each unit 100 within group 2b is collected by another first header 102b. Hydrogen gas is then collected from the first headers 102a, 102b by a second header 104.

The multistage compression system 10 has a plurality of compressors 106 arranged in parallel. Hydrogen gas is distributed to the feed of each compressor by the second header 104.

Compressed hydrogen gas is collected from each compressor 106 by a third header 108 which then feeds the compressed hydrogen gas to the purification unit (not shown).

As indicated in the figure, the plurality 2 of electrolyser units 100 may include one or more further parallel groups 2c, *etc.* (not shown) of electrolyser units 100, each further group producing additional hydrogen gas for collection by a further first header 102c, *etc.* (not shown) which would in turn be collected by an extension (not shown) of the second header 104.

In such embodiments, the multistage compression system 10 would include further compressors (not shown) arranged in parallel and hydrogen gas would be distributed to the feeds to the further compressors by the extension to the second header 104. In addition, compressed hydrogen gas would be collected from the further compressors by an extension (not shown) of the third header 108.

During periods when demand for hydrogen exceeds production, hydrogen gas from storage 44 may be fed in stream 98, after suitable pressure reduction (valve 96) to the second header 104 which distributes the gas feed to the compressors 106. Hydrogen gas from storage 44 may alternatively or subsequently be fed in stream 50, after suitable pressure reduction (valve 48), to the third header 108.

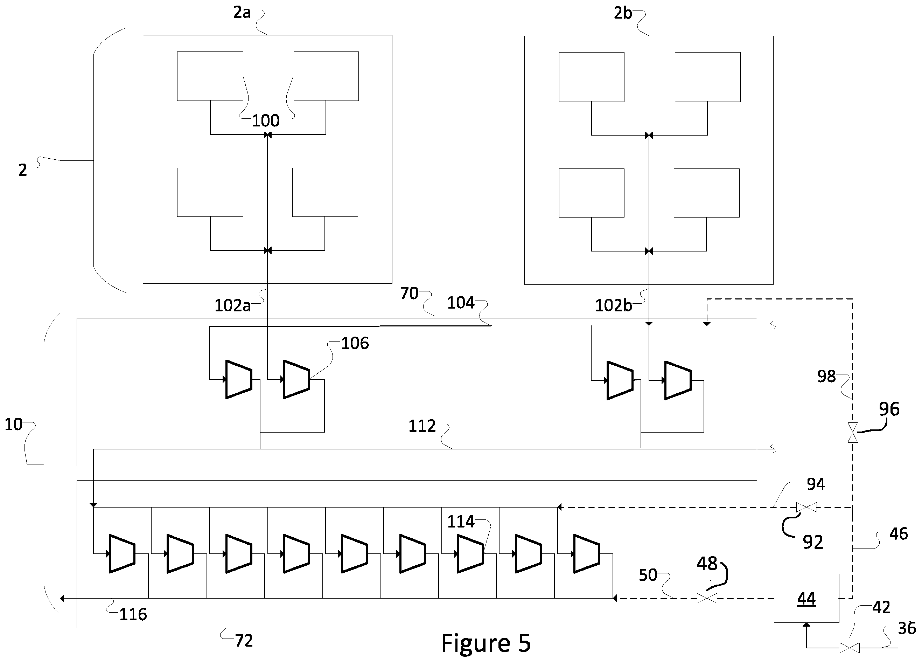

Figure 5 illustrates one arrangement of the electrolysers and the multistage compression system depicted in Figure 3. The same numerical references have been used to denote features of the arrangement in Figure 5 that are common to the previous figures. The following is a discussion of the distinguishing features of this arrangement.

The multistage compression system 10 has an LP section 70 comprising a plurality of compressors 106 arranged in parallel. A third header 112 collects compressed hydrogen gas from the compressors 106 in the LP section 70.

The multistage compression system 10 also has an MP section 72 comprising a plurality of compressors 114 arranged in parallel and compressed hydrogen gas from the LP section 70 is distributed by third header 112 to the compressors 114. A fourth header 116 collects compressed hydrogen from the compressors 114 in the MP section 72 which then feeds the compressed hydrogen to the purification unit (not shown).

As indicated in the figure, the plurality 2 of electrolyser units 100 may include one or more further parallel groups 2c, *etc.* (not shown) of electrolyser units 100, each further group producing additional hydrogen gas for collection by a further first header 102c, *etc.* (not shown) which would in turn be collected by an extension (not shown) of the second header 104.

In such embodiments, the LP section 70 of the multistage compression system 10 would include further compressors (not shown) arranged in parallel and hydrogen gas would be distributed to the feeds to the further compressors by the extension to the second header 104. In addition, compressed hydrogen gas would be collected from the further compressors by an extension (not shown) of the third header 112.

The MP section 72 of the multistage compression system 10 would also include further compressors (not shown) arranged in parallel.

During periods when demand for hydrogen exceeds production, hydrogen gas from storage 44 may be fed in stream 94, after suitable pressure reduction (valve 92), to the third header 112 for distribution to the compressors 114. Alternatively or subsequently, hydrogen gas from storage 44 may be fed in stream 98, after suitable pressure reduction (valve 96), to the second header 104 for distribution to the compressors 106.

It is also possible that hydrogen gas from storage 44 may be fed in stream 50, after suitable pressure reduction (valve 48) to the fourth header 116.

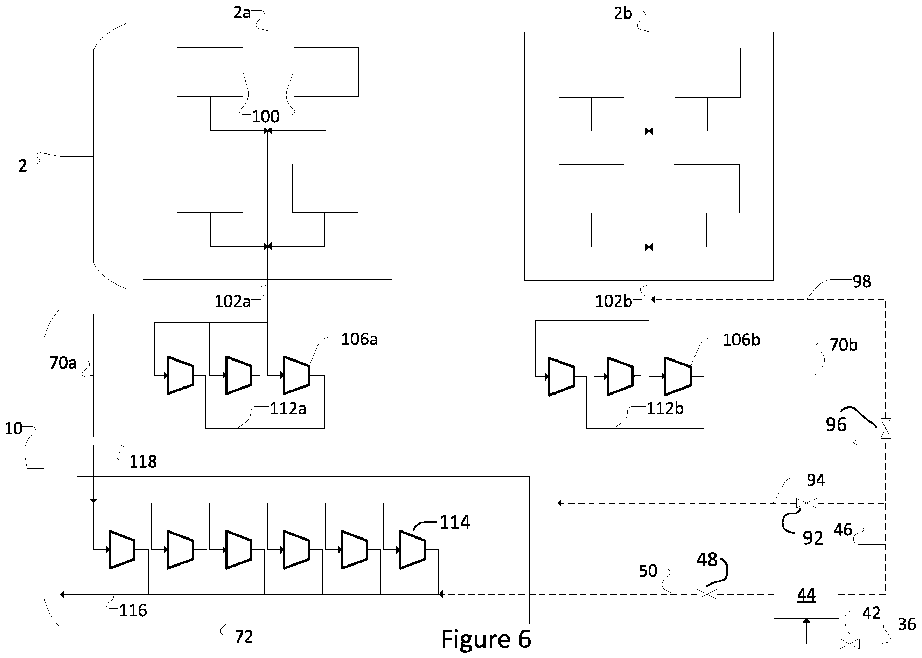

Figure 6 illustrates another arrangement of the electrolysers and the multistage compression system depicted in Figure 3. The same numerical references have been used to denote features of the arrangement in Figure 6 that are common to the previous figures. The following is a discussion of the distinguishing features of this arrangement.

In this arrangement, the first section of the multistage compression system is divided into at least two parallel subsections, 70a and 70b; the first subsection 70a containing a first plurality of compressors 106a arranged in parallel, and the second subsection 70b containing a second plurality of compressors 106b arranged in parallel.

Hydrogen gas produced in the first group 2a of electrolysers 100 is collected in a first header 102a which also distributes the gas to the compressors 106a in the first subsection 70a of the multistage compression system 10. Similarly, hydrogen gas produced in the second group 2b of electrolysers 100 is collected in a first header 102b which also distributes the gas to the compressors 106b in the second subsection 70b of the multistage compression system 10.

Compressed hydrogen gas produced by the compressors 106a in the first subsection 70a is collected by a second header 112a, and compressed hydrogen gas produced by the compressors 106b in the second subsection 70b is collected by a second header 112b.

A third header 118 collects compressed hydrogen gas from the second headers 112a and 112b and then feeds the gas to the compressors 114 in the second section 72 of the multistage compression system 10.

As indicated in the figure, the plurality 2 of electrolyser units 100 may include one or more further parallel groups 2c, *etc.* (not shown) of electrolyser units 100, each further group producing additional hydrogen gas for collection by a further first header 102c, *etc.* (not shown).

In such embodiments, the LP section 70 of the multistage compression system 10 would include further compressors (not shown) arranged in parallel in further parallel subsections 70c, *etc.* and hydrogen gas would be distributed to the feeds to the further compressors by the further first headers 102c, *etc.* In addition, compressed hydrogen gas would be collected from the further compressors by an extension (not shown) of the third header 118.

The MP section 72 of the multistage compression system 10 would also include further compressors (not shown) arranged in parallel.

During periods when demand for hydrogen exceeds production, hydrogen gas from storage 44 may be fed in stream 94, after suitable pressure reduction (valve 92), to the third header 118 for distribution to the compressors 114 in the second section 72 of the multistage compression system 10.

Alternatively or subsequently, hydrogen gas from storage 44 may be fed in stream 98, after suitable pressure reduction (valve 96), to one or more first headers 102a, 102b for distribution to the compressors 106a, 106b in the second subsection 70b of the multistage compression system 10. For simplicity, Figure 6 illustrates feeding first header 102b only. However, it will be understood that stream 98 could feed into header 102a.

Hydrogen gas from storage 44 may be fed in stream 50, after suitable pressure reduction (valve 48), to the fourth header 116.

In this specification, unless expressly otherwise indicated, the word "or" is used in the sense of an operator that returns a true value when either or both of the stated conditions are met, as opposed to the operator "exclusive or" which requires only that one of the conditions is met. The word "comprising" is used in the sense of "including" rather than to mean "consisting of".

## Claims

1. A method for supplying hydrogen gas for consumption in at least one downstream process, said method comprising:
producing hydrogen gas by electrolysis of water;
compressing said hydrogen gas in a multistage compression system to produce compressed hydrogen gas; and
feeding said compressed hydrogen gas to said downstream process(es);
wherein at least some electricity for said electrolysis is generated from at least one renewable energy source;
wherein during periods when more hydrogen gas is produced by said electrolysis than is required for said downstream process(es), said method comprises feeding excess compressed hydrogen gas to storage, optionally after further compression; and
wherein during periods when more hydrogen gas is required for said downstream process(es) than is produced by said electrolysis, said method comprises withdrawing compressed hydrogen gas from storage and, after suitable pressure reduction, feeding said reduced pressure hydrogen gas to a stage of said multistage compression system.

2. A method as claimed in Claim 1, wherein said compressed hydrogen gas is stored at a pressure up to a maximum of 100 bar, or up to a maximum of 50 bar, or up to a maximum of a feed pressure of said downstream process(es).

3. A method as claimed in Claim 1, wherein said compressed hydrogen gas is stored at a pressure down to a minimum of 5 bar, or down to a minimum of 1.3 bar.

4. A method as claimed in any of the preceding claims, wherein said hydrogen gas is fed to said multistage compression system at a feed pressure from atmospheric pressure to 3 bar, preferably from atmospheric pressure to 1.5 bar.

5. A method as claimed in any of the preceding claims, wherein said compressed hydrogen gas produced by said multistage compression system has a pressure from 10 bar to 50 bar.

6. A method as claimed in any of the preceding claims, wherein said multistage compression system comprises a first section and at least one further section downstream of said first section.

7. A method as claimed in Claim 6, wherein said reduced pressure hydrogen gas is fed to the initial stage of said further compression section of said multistage compression system.

8. A method as claimed in any of the preceding claims, wherein said reduced pressure hydrogen gas is fed to an intermediate stage of said multistage compression system.

9. A method as claimed in any of the preceding claims, wherein said reduced pressure hydrogen gas is fed to the feed end of said multistage compression system.

10. A method as claimed in any of Claims 1 to 6, wherein during said periods when more hydrogen gas is required for said downstream process than is produced by said electrolysis, said method comprises:
reducing the pressure of said compressed hydrogen gas withdrawn from storage to produce reduced pressure hydrogen gas at the inlet pressure to a first stage of said multistage compression system; and
feeding said reduced pressure hydrogen gas to said first stage.

11. A method as claimed in Claim 10, wherein once the pressure of said compressed hydrogen gas in storage falls to said inlet pressure of said stage, said method comprises:
reducing further the pressure of said compressed hydrogen gas withdrawn from storage to produce reduced pressure hydrogen gas at an inlet pressure to a second stage of said multistage compression system upstream of said first stage; and
feeding said reduced pressure hydrogen gas to said second stage.

12. A method as claimed in any of the preceding claims, wherein said electrolysis has a total capacity of at least 1 GW.

## Patentansprüche

1. Verfahren zum Zuführen von Wasserstoffgas für einen Verbrauch in wenigstens einem nachgeordneten Prozess, wobei das Verfahren umfasst:
Erzeugen von Wasserstoffgas durch eine Elektrolyse von Wasser,
Komprimieren des Wasserstoffgases in einem mehrstufigen Kompressionssystem für das Erzeugen eines komprimierten Wasserstoffgases, und
Zuführen des komprimierten Wasserstoffgases zu dem oder den nachgeordneten Prozessen,
wobei wenigstens ein Teil des Stroms für die Elektrolyse aus einer erneuerbaren Energiequelle erzeugt wird,
wobei während Perioden, in denen mehr Wasserstoffgas durch die Elektrolyse erzeugt wird als für den oder die nachgeordneten Prozesse erforderlich ist, das Verfahren das Zuführen von übermäßigem komprimiertem Wasserstoffgas zu einem Speicher, optional nach einer weiteren Kompression umfasst, und
wobei während Perioden, in denen mehr Wasserstoffgas für den oder die nachgeordneten Prozesse erforderlich ist als durch die Elektrolyse erzeugt wird, das Verfahren das Entnehmen von komprimiertem Wasserstoffgas aus dem Speicher und, nach einer geeigneten Druckreduktion, das Zuführen des Wasserstoffgases mit einem reduzierten Druck zu einer Stufe des mehrstufigen Kompressionssystems umfasst.

2. Verfahren nach Anspruch 1, wobei das komprimierte Wasserstoffgas bei einem erhöhten Druck von bis zu maximal 100 bar oder bis zu maximal 50 bar oder bis zu maximal einem Zufuhrdruck des oder der nachgeordneten Prozesse gespeichert wird.

3. Verfahren nach Anspruch 1, wobei das komprimierte Wasserstoffgas bei einem verminderten Druck von bis zu minimal 5 bar oder bis zu minimal 1,3 bar gespeichert wird.

4. Verfahren nach einem der vorstehenden Ansprüche, wobei das Wasserstoffgas zu einem mehrstufigen Kompressionssystem mit einem Zufuhrdruck von atmosphärischem Druck bis zu 3 bar und vorzugsweise von atmosphärischem Druck bis zu 1,5 bar zugeführt wird.

5. Verfahren nach einem der vorstehenden Ansprüche, wobei das komprimierte Wasserstoffgas, das durch das mehrstufige Kompressionssystem erzeugt wird, einen Druck von 10 bar bis 50 bar aufweist.

6. Verfahren nach einem der vorstehenden Ansprüche, wobei das mehrstufige Kompressionssystem einen ersten Abschnitt und wenigstens einen weiteren Abschnitt stromabwärts von dem ersten Abschnitt umfasst.

7. Verfahren nach Anspruch 6, wobei das Wasserstoffgas mit einem reduzierten Druck zu der anfänglichen Stufe des weiteren Kompressionsabschnitts des mehrstufigen Kompressionssystems zugeführt wird.

8. Verfahren nach einem der vorstehenden Ansprüche, wobei das Wasserstoffgas mit einem reduzierten Druck zu einer mittleren Stufe des mehrstufigen Kompressionssystems zugeführt wird.

9. Verfahren nach einem der vorstehenden Ansprüche, wobei das Wasserstoffgas mit einem reduzierten Druck zu dem Zuführende des mehrstufigen Kompressionssystems zugeführt wird.

10. Verfahren nach einem der Ansprüche 1 bis 6, wobei während der Perioden, in denen mehr Wasserstoffgas für den nachgeordneten Prozess erforderlich ist als durch die Elektrolyse erzeugt wird, das Verfahren umfasst:
Reduzieren des Drucks des komprimierten Wasserstoffgases, das aus dem Speicher entnommen wird, um ein Wasserstoffgas mit einem reduzierten Druck an dem Einlassdruck zu einer ersten Stufe des mehrstufigen Kompressionssystems zu erzeugen, und
Zuführen des Wasserstoffgases mit einem reduzierten Druck zu der ersten Stufe.

11. Verfahren nach Anspruch 10, wobei, sobald der Druck des komprimierten Wasserstoffgases in dem Speicher zu dem Einlassdruck der Stufe fällt, das Verfahren umfasst:
weiteres Reduzieren des Drucks des komprimierten Wasserstoffgases, das aus dem Speicher entnommen wird, um ein Wasserstoffgas mit einem reduzierten Druck an einem Einlassdruck zu einer zweiten Stufe des mehrstufigen Kompressionssystems stromaufwärts von der ersten Stufe zu erzeugen, und
Zuführen des Wasserstoffgases mit einem reduzierten Druck zu der zweiten Stufe.

12. Verfahren nach einem der vorstehenden Ansprüche, wobei die Elektrolyse eine Gesamtkapazität von wenigstens 1 GW aufweist.

## Revendications

1. Procédé de fourniture d'hydrogène gazeux destiné à être consommé dans au moins un procédé aval, ledit procédé comprenant :
la production d'hydrogène gazeux par électrolyse d'eau ;
la compression dudit hydrogène gazeux dans un système de compression multiétagé afin de produire de l'hydrogène gazeux comprimé ; et
l'alimentation dudit hydrogène gazeux comprimé vers le ou lesdits procédés aval ;
dans lequel une partie au moins de l'électricité destinée à ladite électrolyse est générée à partir d'au moins une source d'énergie renouvelable ;
dans lequel, pendant les périodes où davantage d'hydrogène gazeux est produit par ladite électrolyse que ce qui est requis pour le ou les procédés aval, ledit procédé comprend l'alimentation de l'excès d'hydrogène gazeux comprimé vers un stockage, éventuellement après une compression supplémentaire ; et
dans lequel, pendant les périodes où davantage d'hydrogène gazeux est requis pour le ou les procédés aval que ce qui est produit par ladite électrolyse, ledit procédé comprend le soutirage d'hydrogène gazeux comprimé depuis le stockage et, après une réduction de pression appropriée, l'alimentation dudit hydrogène gazeux à pression réduite vers un étage dudit système de compression multiétagé.

2. Procédé selon la revendication 1, dans lequel ledit hydrogène gazeux comprimé est stocké à une pression allant jusqu'à un maximum de 100 bar, ou jusqu'à un maximum de 50 bar, ou jusqu'à un maximum correspondant à une pression d'alimentation du ou desdits procédés aval.

3. Procédé selon la revendication 1, dans lequel ledit hydrogène gazeux comprimé est stocké à une pression allant jusqu'à un minimum de 5 bar, ou jusqu'à un minimum de 1,3 bar.

4. Procédé selon l'une quelconque des revendications précédentes, dans lequel ledit hydrogène gazeux est alimenté vers ledit système de compression multiétagé à une pression d'alimentation allant de la pression atmosphérique à 3 bar, de préférence de la pression atmosphérique à 1,5 bar.

5. Procédé selon l'une quelconque des revendications précédentes, dans lequel ledit hydrogène gazeux comprimé produit par ledit système de compression multiétagé présente une pression de 10 bar à 50 bar.

6. Procédé selon l'une quelconque des revendications précédentes, dans lequel ledit système de compression multiétagé comprend une première section et au moins une section supplémentaire en aval de ladite première section.

7. Procédé selon la revendication 6, dans lequel ledit hydrogène gazeux à pression réduite est alimenté vers l'étage initial de ladite section de compression supplémentaire dudit système de compression multiétagé.

8. Procédé selon l'une quelconque des revendications précédentes, dans lequel ledit hydrogène gazeux à pression réduite est alimenté vers un étage intermédiaire dudit système de compression multiétagé.

9. Procédé selon l'une quelconque des revendications précédentes, dans lequel ledit hydrogène gazeux à pression réduite est alimenté vers l'extrémité d'alimentation dudit système de compression multiétagé.

10. Procédé selon l'une quelconque des revendications 1 à 6, dans lequel, pendant lesdites périodes où davantage d'hydrogène gazeux est requis pour le procédé aval que ce qui est produit par ladite électrolyse, ledit procédé comprend :
la réduction de la pression dudit hydrogène gazeux comprimé soutiré depuis le stockage afin de produire de l'hydrogène gazeux à pression réduite à la pression d'entrée d'un premier étage dudit système de compression multiétagé ; et
l'alimentation dudit hydrogène gazeux à pression réduite vers ledit premier étage.

11. Procédé selon la revendication 10, dans lequel, une fois que la pression dudit hydrogène gazeux comprimé dans le stockage chute jusqu'à ladite pression d'entrée dudit étage, ledit procédé comprend :
la réduction supplémentaire de la pression dudit hydrogène gazeux comprimé soutiré depuis le stockage afin de produire de l'hydrogène gazeux à pression réduite à une pression d'entrée d'un deuxième étage dudit système de compression multiétagé en amont dudit premier étage ; et
l'alimentation dudit hydrogène gazeux à pression réduite vers ledit deuxième étage.

12. Procédé selon l'une quelconque des revendications précédentes, dans lequel ladite électrolyse a une capacité totale d'au moins 1 GW.
